# EUROPÄISCHE PATENTSCHRIFT

(11) **EP 1 325 842 B1**
(45) Veröffentlichungstag und Bekanntmachung des Hinweises auf die Patenterteilung: **11.10.2006**
(21) Anmeldenummer: 02027462.7
(22) Anmeldetag: 10.12.2002
(51) Int. Cl.: B60R 9/058, B60R 9/052

(54) **Diebstahlsicherer Dachlastträger**
Theft-resistant roof carrier
Porte-bagages de toit antivol

(30) Priorität: 18.12.2001 DE 10162018
(43) Veröffentlichungstag der Anmeldung: 09.07.2003
(73) Patentinhaber: ADAM OPEL AG, 65423 Rüsselsheim (DE)
(72) Erfinder: Berndt, Frank Olaf, Dipl.-Ing, 64572 Büttelborn (DE); Hürter, Helmut, Dipl.-Ing., 64572 Büttelborn (DE)

(56) Entgegenhaltungen:
- EP-A- 0 694 441
- DE-A- 3 104 163
- DE-A- 19 708 906
- FR-A- 2 737 168
- FR-A- 2 780 008

## Beschreibung

Die Erfindung bezieht sich auf einen diebstahlsicheren Dachlastträger gemäß dem Oberbegriff des Anspruchs 1.
**[0001a]** Ein derartiger gattungsbildender Dachlastträger ist Gegenstand der FR-A-2 780 008. Die lösbaren Verbindungsmittel sind Schraubenköpfe, die in einem Kanal im Querträger liegen und durch Löcher in einer oberen Wand des Querträgers zugänglich sind. Um die Löcher zu verschließen, wird eine Abdeckung seitlich in den weitgehend bis auf einen Eingang geschlossenen Kanal am Dachlastträger eingesetzt. Die Abdeckung ist mit einer Kappe derart verbunden, dass nach Einführung der Abdeckung in den Kanal, die Kappe den Eingang zum Kanal und damit den Zugang zu den Schraubköpfen verschließt. Nachteilig hierbei ist, dass der Zugang zu den Befestigungsmitteln, mit denen der Stützfuß am Fahrzeugdach befestigt wird, weiterhin frei zugänglich ist.

Ferner ist in der DE 86 33 382 U1 ein Dachlastträger beschrieben, der aus einem Querträger, an dem zu beiden Seiten Stützfüße angeschraubt sind, besteht. Dazu wird jeweils eine Schraube durch eine obere Abschlusswand eines Stützfußes von unten in den Querträger eingeschraubt. Um zu verhindern, dass die Schraube von nicht befugten Personen gelöst und der Querträger mit den daran befestigten Gegenständen entfernt wird, ist eine Abdeckung vorgesehen, die mit einem Zylinder eines Schlosses verbunden ist. Zur Sicherung der Schraube wird die Abdeckung durch ein Verriegeln des Schlosses unmittelbar vor den Schraubenkopf gebracht und damit verhindert, dass die Schraube mit einem Schraubenzieher gelöst werden kann. Nachteilig bei dieser Ausführung ist, dass die Abdeckung vollkommen frei liegt und mit einem geeigneten Hilfsmittel leicht weggebrochen werden kann, auch ohne dass das Schloss entriegelt wird. Damit wäre die Schraube wieder zugänglich und könnte gelöst werden.

Die Erfindung beruht somit auf der Aufgabe, die Diebstahlsicherung eines Dachlastträgers zu verbessern.

Zur Lösung dieses Problems sieht die Erfindung den Gegenstand des Anspruchs 1 vor.

Zum einen ist erfindungsgemäß die Abdeckung nicht mehr frei zugänglich. Um an diese Schraube zu gelangen, muss die Kappe entfernt werden, in dem das Schloss aufgebrochen wird, was wesentlich schwieriger ist, als einfach die Abdeckung wegzubrechen.

Zum anderen hat die Erfindung weiterhin den Vorteil, dass die Kappe auch weitere Aufgaben übernehmen kann. In dem Stützfuß befindet sich üblicherweise ein verstellbares Befestigungsmittel für die Befestigung des Dachlastträgers an einem Fahrzeugdach. Wenn die Verstellmittel für diese Befestigungsmittel in einem seitlich offenen Hohlraum im Stützfuß untergebracht werden, kann die Kappe so ausgeführt werden, dass sie die seitliche Öffnung des Hohlraumes verschließt und damit auch der Zugang zu den Verstellmitteln unterbunden ist. Damit sichert die Kappe nicht nur die Verbindung zwischen dem Querträger und dem Stützfuß, sondern auch die Befestigung des Stützfußes mit dem Fahrzeugdach.

Darüber hinaus kann die Kappe auch so ausgeführt werden, dass sie die seitliche Öffnung einer oberen Schiene am Querträger verschließt, die an die jeweils zu transportierenden Gegenstände angepasste Lasthalter aufnimmt.

Aus der DE 34 05 537 C2 ist zwar eine verschließbare Kappe bekannt, die sowohl den Zugang zu den Verstellmitteln für die Befestigungsmittel als auch zu der Schiene verschließt. Hier übernimmt die Kappe aber nicht die Aufgabe, den Zugang zu den Verbindungsmitteln zu schließen, mit dem der Querträger an den Stützfüßen gehalten wird. Dies ist auch nicht notwendig, da dies eine nicht lösbare Verbindung ist.

Eine bevorzugte Ausführung besteht darin, dass der Querträger einen sich in Längsrichtung erstreckenden Kanal aufweist, wobei es sich bei dem Verbindungsmittel um mindestens eine Schraube handelt, deren Schraubenkopf in dem Kanal liegt und durch ein Loch in der oberen Wand des Kanals zugänglich ist.

Bei einer solchen Ausführung ist die Abdeckung als Lasche ausgebildet, die in dem Kanal zwischen dem Schraubenkopf und dem darüber liegenden Loch liegt. Dazu wird sie zuvor in den Kanal durch seine Stirnöffnung eingeführt. In diesem Sinn bildet der Kanal eine allseitig geschlossene Aufnahme und seine stirnseitige Öffnung den verschließbaren Eingang.

Wenn die Lasche entfernt ist, kann ein Werkzeug durch das Loch hindurchgeführt werden und die Schraube angezogen bzw. gelöst werden. Nach dem Einsetzen der Lasche ist das Loch praktisch verschlossen, so dass kein Zugang mehr zu dem Schraubenkopf möglich ist. Dieser liegt nämlich in dem nun allseitig geschlossenen Kanal des Querträgers. Auch die Lasche selbst kann nicht weggebrochen werden, da das Loch bzw. die Löcher - wenn mehrere Schrauben vorgesehen sind - zu klein sind, um ein Hebelwerkzeug anzusetzen.

Um zu verhindern, dass die Lasche zu weit in den Querträger hineinrutscht, können Haken an der Lasche vorgesehen werden. Diese können am Querträger anliegen oder aber auch in eine Tasche an der Innenseite der Kappe eingreifen. Ein Kopf der Lasche liegt an der Innenseite der Kappe an, wodurch verhindert wird, dass die Lasche aus dem Kanal herausrutscht.

Dabei sind die Haken vorzugsweise so ausgebildet, dass eine Verbindung mit der Kappe entsteht und die Lasche damit mit der Kappe eine Einheit bildet. Dazu ist die Innenseite der Kappe mit einer Tasche versehen, in die das aus dem Kanal hervorstehende Ende der Lasche eingesteckt ist. Zwar könnte die Lasche auch einstückig mit der Kappe ausgeführt werden: Dies würde aber ein relativ aufwändiges Werkzeug zum Herstellen der Einheit aus Kappe und Lasche bedingen.

Zur Stabilisierung der Abdeckung und/oder Lasche kann diese im Querschnitt U-förmig ausgeführt sein, was auch ihre Führung in dem Kanal verbessert. Außerdem können federnd nachgiebige Zungen vorgesehen sein, die die Abdeckung und/oder Lasche klapperfrei in dem Kanal halten.

Zur Verdeutlichung des Erfindungsgedankens soll im Folgenden anhand eines Ausführungsbeispiels, dargestellt in zwei Figuren, die Erfindung näher erläutert werden. Dazu zeigt
- Fig. 1: eine perspektivische Darstellung eines Dachlastträgers mit einem Querträger und einem Stützfuß sowie mit einer Kappe,
- Fig. 2: einen Querschnitt entlang der Linie II-II.

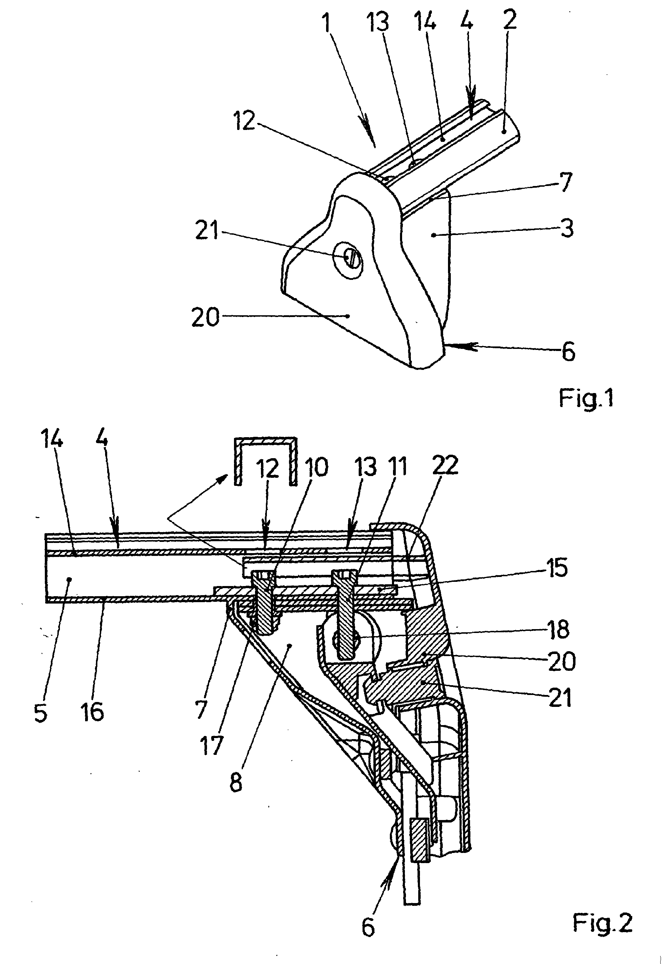

Gemäß der Figur 1 besteht der Dachlastträger 1 aus einem Querträger 2 und zwei Stützfüßen 3 zu beiden Enden des Querträgers 2, wobei nur das eine Ende des Querträgers 2 mit einem Stützfuß 3 dargestellt ist. Bei dem Querträger 2 handelt es sich um ein Stranggussprofil aus Aluminium mit einer oberen C-förmigen Schiene 4 und einem darunter liegenden, allseitig geschlossenen Kanal 5. Der Stützfuß 3 besteht aus Metall und hat eine keilförmige Form, die unten eine Einsteckkante 6 und oben einen Sockel 7 mit einer Abschlusswand bildet, auf der der Querträger 2 aufliegt. Mit der unteren Einsteckkante 6 taucht der Stützfuß 3 in eine Rinne am Fahrzeugdach ein und hintergreift mit einem verstellbaren Befestigungsmittel, insbesondere mit einem Haken ein Widerlager in dieser Rinne.

Der Stützfuß 3 bildet einen seitlich offenen Hohlraum 8, in dem sich ein Hebel befindet, mit dem der Haken von einer Entriegelungs- in eine Verriegelungsposition geschwenkt werden kann.

Auf der Abschlusswand des Sockels des Stützfußes 3 liegt der Querträgers 2 auf und ist dort mit Verbindungsmitteln, realisiert durch zwei Schrauben 10, 11, befestigt. Diese werden von oben durch zwei Löcher 12, 13 in eine die obere Wand 14 des Kanals 5 bildende Zwischenwand zwischen dem Kanal 5 und der Schiene 4 eingeführt, so dass ihre Köpfe unter Zwischenlage einer Unterlegscheibe 15 auf der unteren Wand 16 des Kanals 5 aufliegen. Die Schraubenhälse durchdringen Öffnungen in der unteren Wand 16 und in der Abschlusswand des Sockels 7 des Stützfußes 3 und werden in entsprechende Gegenmuttern 17, 18, die sich innerhalb des Hohlraumes 8 des Stützfußes 3 befinden, eingeschraubt. Dazu wird ein Schraubenzieher durch die Löcher 12, 13 in der Zwischenwand hindurchgeführt.

Um die Anordnung gegen Diebstahl zu sichern, wird auf die offene Seite des Stützfußes 3 und des Querträgers 2 eine Kappe 20 aufgesetzt und mittels eines Schlosses 21 am Stützfuß 3 befestigt. Diese Kappe 20 verschließt vollständig die seitlichen Öffnungen des Hohlraumes 8 im Stützfuß 3 sowie des Kanals 5 und der Schiene 3.

Um den Zugang zu den Köpfen der Schrauben 10, 11 zu verhindern, befindet sich an der Innenseite der Kappe 20 eine eine Abdeckung bildende Lasche 22, die in den Kanal 5 eingeführt wird und sich zwischen die Schraubenköpfe und die Löcher 12, 13 legt. Der Kanal 5 bildet damit eine Aufnahme für die Abdeckung der Verbindungsmittel und seine Stirnöffnung den verschließbaren Eingang zu dieser Aufnahme. Damit sind die Löcher 12, 13 verschlossen, so dass kein Werkzeug mehr an die Schraubenköpfe gelangen kann. Die Lasche besitzt einen U-förmigen Querschnitt zur Erhöhung ihrer Stabilität.

Bei der Lasche 22 handelt es sich um ein Einzelteil, das in eine Tasche an der Innenseite der Kappe 20 eingeklipst wird. Die Lasche kann auch getrennt von der Kappe 20 in den Kanal 5 eingesetzt werden. Dann besitzt sie Haken, die sich an den Öffnungsrand des Querträgers 2 anlegen, um zu verhindern, dass sie zu weit in den Kanal 5 hineingleiten. Außerdem kann die Lasche - was hier nicht dargestellt ist - federnde Zungen aufweisen, die für einen klapperfreien Halt im Kanal 5 sorgen.

### Bezugszeichenliste

- 1: Dachlastträger
- 2: Querträger
- 3: Stützfuß
- 4: Schiene
- 5: Kanal

- 6: Einsteckkante
- 7: Sockel
- 8: Hohlraum
- 10: Schraube
- 11: Schraube

- 12: Loch
- 13: Loch
- 14: obere Wand
- 15: Unterlegscheibe
- 16: untere Wand

- 17: Gegenmutter
- 18: Gegenmutter
- 20: Kappe
- 21: Schloss
- 22: Lasche

## Patentansprüche

1. Diebstahlsicherer Dachlastträger mit einem an zwei Stützfüßen (3) mit lösbaren Verbindungsmitteln (10, 11) befestigten Querträger (2), wobei jeder Stützfuß (3) ein verstellbares Befestigungsmittel für die Befestigung des Dachlastträgers (1) an einem Fahrzeugdach aufweist und der Zugang zu den Verbindungsmitteln (10, 11), der ein Lösen der Verbindungsmittel ermöglicht, durch eine Abdeckung (22) versperrt ist, wobei die Abdeckung (22) in eine weitgehend bis auf einen Eingang geschlossene Aufnahme (5) am Dachlastträger (1) eingesetzt ist, wobei dieser Eingang zur Einführung der Abdeckung in die Aufnahme dient und durch eine Kappe (20) verschlossen ist, die mittels eines Schlosses (21) lösbar am Dachlastträger (1) befestigt ist **dadurch gekennzeichnet, dass** die Verstellmittel der Befestigungsmittel in einem seitlich offenen Hohlraum (8) im Stützfuß (3) liegen und die offene Seite des Hohlraumes (8) durch die Kappe (20) verschließbar ist.

2. Dachlastträger nach Anspruch 1 , **dadurch gekennzeichnet, dass** der Querträger (2) eine obere C-förmige und seitlich offene Schiene (4) aufweist, in der an die jeweils zu transportierenden Gegenstände angepasste Lasthalter eingesetzt sind, und dass die Kappe (20) die seitliche Öffnung der Schiene (4) abdeckt.

3. Dachlastträger nach Anspruch 1 oder 2, **dadurch gekennzeichnet, dass** der Querträger (2) einen in seine Längsrichtung sich erstreckenden Kanal (5) aufweist, dass es sich bei den Verbindungsmitteln um mindestens eine Schraube (10, 11) handelt, deren Schraubenkopf in dem Kanal (5) liegt.

4. Dachlastträger nach Anspruch 3, **dadurch gekennzeichnet, dass** der Schraubenkopf durch ein Loch (12, 13) in der oberen Wand (14) des Kanals (5) zugänglich ist und dass die Abdeckung als Lasche (22) ausgebildet ist, die in den Kanal (5) durch seine Stirnöffnung einführbar ist und dort zwischen dem Schraubenkopf und dem darüber liegenden Loch (12, 13) liegt.

5. Dachlastträger nach Anspruch 4, **dadurch gekennzeichnet, dass** die Lasche (22) Haken aufweist, die verhindern, dass sie zu weit in den Kanal (5) hineingelangt.

6. Dachlastträger nach Anspruch 5, **dadurch gekennzeichnet, dass** die Haken am Querträger (2) anliegen und ein aus dem Kanal (5) hervorstehender Kopf der Lasche (22) an der Innenseite der Kappe (20) abgestützt ist.

7. Dachlastträger nach Anspruch 5, **dadurch gekennzeichnet, dass** die Kappe (20) an ihrer Innenseite eine Tasche aufweist, in der die Haken eingreifen.

8. Dachlastträger nach einem der vorhergehenden Ansprüche, **dadurch gekennzeichnet, dass** die Abdeckung und/oder Lasche einen U-förmigen Querschnitt aufweist.

9. Dachlastträger nach einem der vorhergehenden Ansprüche, **dadurch gekennzeichnet, dass** die Abdeckung und/oder Lasche federnd nachgiebige Zungen aufweist, die an den Wänden des Kanals (5) anliegen.

## Claims

1. Theft-proof roof rack with a transverse bar (2) which is fastened to two support feet (3) by releasable connecting means (10, 11), wherein each support foot (3) comprises an adjustable fastening means for fastening the roof rack (1) to a vehicle roof, and access to the connecting means (10, 11) permitting the connecting means to be released is blocked by a cover (22), wherein the cover (22) is inserted in a seating (5), which is largely closed apart from an entrance, at the roof rack (1), wherein this entrance serves to introduce the cover into the seat and is closed by a cap (20) which is releasably fastened to the roof rack (1) by means of a lock (21), **characterised in that** the adjusting means of the fastening means are located in a laterally open hollow space (8) in the support foot (3), and the open side of the hollow space (8) can be closed by the cap (20).

2. Roof rack according to Claim 1, **characterised in that** the transverse bar (2) comprises an upper C-shaped and laterally open rail (4) in which there are inserted load retainers which are adapted to the respective objects which are to be transported, and that the cap (20) covers the lateral opening of the rail (4).

3. Roof rack according to Claim 1 or 2, **characterised in that** transverse bar (2) comprises a channel (5) extending in its longitudinal direction, and that the connecting means are at least one screw (10, 11) whose screw head lies in the channel (5).

4. Roof rack according to Claim 3, **characterised in that** the screw head is accessible through a hole (12, 13) in the upper wall (14) of the channel (5), and that the cover is formed as a plate member (22) which can be introduced into the channel (5) through its end opening and is located there between the screw head and the hole (12, 13) thereabove.

5. Roof rack according to Claim 4, **characterised in that** the plate member (2) comprises hooks which prevent it from passing too far into the channel (5).

6. Roof rack according to Claim 5, **characterised in that** the hooks lie against the transverse bar (2) and a head of the plate member (22) projecting out of the channel (5) is supported on the inside of the cap (20).

7. Roof rack according to Claim 5, **characterised in that**, on its inside, the cap (20) comprises a pocket in which the hooks engage.

8. Roof rack according to any one of the preceding Claims, **characterised in that** cover and/or plate member have/has a U-shaped cross section.

9. Roof rack according to any one of the preceding Claims, **characterised in that** the cover and/or plate member comprise/s resiliently compliant tongues which lie against the walls of the channel (5).

## Revendications

1. Porte-bagages de toit anti-vol avec un support transversal (2) fixé à deux pieds d'appui (3) avec des moyens d'assemblage (10, 11) amovibles, dans lequel chaque pied d'appui (3) comprend un moyen de fixation réglable pour la fixation du porte-bagages de toit (1) à un toit de véhicule et l'accès aux moyens d'assemblage (10, 11), qui permet de libérer les moyens d'assemblage, est bloqué par un recouvrement (22), le recouvrement (22) étant introduit dans un logement (5) fermé largement jusqu'à une entrée, située sur le porte-bagages de toit (1), cette entrée servant pour l'introduction du recouvrement dans le logement et étant fermée par un capuchon (20), qui est fixé de manière amovible sur le porte-bagages de toit (1) au moyen d'une serrure (21), **caractérisé en ce que** les moyens de réglage des moyens de fixation se situent dans un espace creux (8) ouvert sur le côté situé dans la patte d'appui (3) et **en ce que** le côté ouvert de l'espace creux (8) est susceptible d'être fermé par le capuchon (20).

2. Porte-bagages de toit selon la revendication 1, **caractérisé en ce que** le support transversal (2) comprend un rail (4) supérieur en forme de C et ouvert sur le côté, dans lequel sont introduits des supports de charge respectifs adaptés aux objets à transporter et **en ce que** le capuchon (20) recouvre l'ouverture latérale du rail (4).

3. Porte-bagages de toit selon la revendication 1 ou 2, **caractérisé en ce que** le support transversal (2) comporte un canal (5) s'étendant dans sa direction longitudinale, qu'en ce qui concerne les moyens d'assemblage, il s'agit au moins d'une vis (10, 11), dont la tête de vis se situe dans le canal (5).

4. Porte-bagages de toit selon la revendication 3, **caractérisé en ce que** la tête de vis est accessible par un trou (12, 13) situé dans la paroi supérieure (14) du canal (5) et **en ce que** le recouvrement est conçu comme une patte (22), qui peut être introduite dans le canal (5) par son ouverture frontale et repose à cet endroit entre la tête de vis et le trou (12, 13) situé au-dessus.

5. Porte-bagages de toit selon la revendication 4, **caractérisé en ce que** la patte (22) comprend des crochets, qui empêchent qu'elle ne se déplace trop loin dans le canal (5).

6. Porte-bagages de toit selon la revendication 5, **caractérisé en ce que** les crochets sont appliqués sur le support transversal (2) et **en ce qu'**une tête de la patte (22) dépassant hors du canal (5) est appuyée sur la face intérieure du capuchon (20).

7. Porte-bagages de toit selon la revendication 5, **caractérisé en ce que** le capuchon (20) comprend sur sa face intérieure une poche, dans laquelle pénètrent les crochets.

8. Porte-bagages de toit selon l'une quelconque des revendications précédentes, **caractérisé en ce que** le recouvrement et/ou la patte présente(nt) une section transversale en forme de U.

9. Porte-bagages de toit selon l'une quelconque des revendications précédentes, **caractérisé en ce que** le recouvrement et/ou la patte présente(nt) des languettes élastiques, qui sont adjacentes aux parois du canal (5).
